Europäisches Patentamt

European Patent Office

Office européen des brevets

(19)

(11) Numéro de publication : **0 083 281**
**B1**

(12) **FASCICULE DE BREVET EUROPÉEN**

(45) Date de publication du fascicule du brevet :
**12.11.86**

(21) Numéro de dépôt : **82402353.5**

(22) Date de dépôt : **21.12.82**

(51) Int. Cl.⁴ : **H 04 M 19/08**

(54) **Procédé et dispositif d'alimentation d'une régie d'abonné.**

(30) Priorité : **24.12.81 FR 8124196**

(43) Date de publication de la demande :
**06.07.83 Bulletin 83/27**

(45) Mention de la délivrance du brevet :
**12.11.86 Bulletin 86/46**

(84) Etats contractants désignés :
**AT BE CH DE GB IT LI LU NL SE**

(56) Documents cités :
**EP-A- 0 035 067**
**DE-B- 2 541 053**
**FR-A- 1 358 909**
**FR-A- 2 262 455**
**THE POST OFFICE ELECTRICAL ENGINEERS JOUR-
NAL, vol. 66, no. 2, juillet 1973, pages 73-76, Londres,
G.B., B.R. FREER et al.: "Local-battery charging over
subscribers' lines"**

(73) Titulaire : **SOCIETE ANONYME DE TELECOMMUNI-
CATIONS**
**40 avenue de New York**
**F-75116 Paris (FR)**

(72) Inventeur : **Barbier, Xavier Noel**
**105, avenue de Combault**
**F-94420 Plessis Trevise Val de Marne (FR)**
Inventeur : **de Passoz, Guy André**
**19, rue du Grand Veneur**
**F-77330 Lesigny Seine et Marne (FR)**

(74) Mandataire : **Bloch, Robert et al**
**6, rue du Faubourg Saint-Honoré**
**F-75008 Paris (FR)**

EP 0 083 281 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne un dispositif d'alimentation d'une régie d'abonné, comportant, côté central, des moyens d'alimentation en courant continu de ladite régie et des moyens de commande de ladite alimentation, et, côté régie, des moyens de signalisation agencés pour initialiser une communication.

Les fonctions de base essentiellement destinées à assurer le service téléphonique comprennent en particulier l'alimentation, l'appel, la conversation, la réception d'appel. Parmi les fonctions spécifiques on connaît des fonctions pour le service téléphonique : ce sont par exemple l'écoute amplifiée, la numérotation sans décrochage, le service répondeur, le composeur de numéros et des fonctions pour les services nouveaux tels que les services de transmission de données, de télémesure, de téléalarme.

Pour assurer ces différentes fonctions un terminal appelé régie d'abonné permet le raccordement des postes téléphoniques et des terminaux télématiques susceptibles de fonctionner simultanément. La régie d'abonné peut, par exemple, être reliée au central au moyen d'un circuit à deux fils. Un tel circuit à deux fils permet de disposer de voies de données à grande vitesse dans les deux sens de transmission.

Pour les postes d'abonnés connus des techniques analogiques, une alimentation à batterie centrale permet d'assurer le fonctionnement du poste. La surveillance du courant d'alimentation du poste permet la supervision de l'état boucle de l'abonné afin de détecter, au niveau du central, un décrochage de l'abonné qui désire établir une communication (appel départ). Dans le cas d'un appel arrivée, l'abonné est alerté par l'émission d'un courant d'appel à 50 Hz ou 25 Hz qui vient actionner une sonnerie située dans les locaux de l'abonné.

Un système d'alimentation de type batterie centrale serait également envisageable pour la régie d'abonné. Il devrait alors permettre en cas de décrochage (appel départ) la fermeture de boucle. Dans le cas d'un appel arrivée, la méthode conventionnelle du signal à 75 V eff (25 ou 50 Hz) susceptible d'activer une sonnerie locale ne semble toutefois pas très compatible avec les signaux numériques transmis sur la ligne. En effet les signaux numériques sont de plus faible amplitude que les signaux analogiques et nécessitent d'importantes protections. La valeur élevée de la tension du signal d'appel peut poser de ce fait des problèmes sérieux de protection, d'interface.

La présente invention se propose d'assurer une alimentation centrale de la régie d'abonné au moins en ce qui concerne les fonctions de base (téléphone), et de permettre l'initialisation des communications de départ ou d'arrivée.

Le système étant alimenté, une solution simple permettant d'initialiser les communications de départ aussi bien que d'arrivée consisterait à transmettre des messages entre régie et centre de rattachement du central sur le canal numérique d'informations.

Une telle solution est extrêmement intéressante car elle permet au central de superviser l'état des terminaux de l'abonné et en particulier de détecter au niveau du central un décrochage de d'abonné qui désire établir une communication. Ainsi l'état du poste d'abonné peut être aisément transmis à l'aide du débit d'information destiné à la signalisation.

Cependant une telle solution serait très coûteuse en énergie car elle nécessiterait une alimentation permanente de tous les abonnés, afin d'assurer la possibilité à tout moment de transmission d'informations de signalisation entre régie et central. De plus le risque de perturbation entre systèmes augmenterait du fait que tous les systèmes seraient actifs simultanément.

La présente invention vise d'une part à assurer une alimentation du poste d'abonné depuis le central, d'autre part à prévoir cette alimentation uniquement en réponse à des appels émis soit par le central, soit par l'abonné, pour initialiser une communication. Dans le cas d'un appel arrivée, afin d'initialiser la communication, le central provoque l'alimentation de la régie. Lorsqu'un appel dit de départ est émis par un poste d'abonné vers le central il est nécessaire de prévenir le central d'alimenter la régie. La présente invention vise à engendrer un message dit de préambule depuis la régie pour prévenir le central d'assurer une alimentation normale de la régie.

Un dispositif du type défini ci-dessus est notamment connu par le document EP-A-0 035 067. Dans ce dispositif, la téléalimentation de la régie est donc assurée par deux fils et de façon non permanente. Toutefois, le sens de connexion des fils dans ce dispositif connu n'est pas indifférent. C'est là déjà un inconvénient que l'invention de la présente demande, vise à éliminer.

Connaissant, par ailleurs, par le document DE-B-2 541 053, un dispositif d'alimentation de régie comprenant un condensateur se chargeant d'une énergie limitée en tension par une diode Zener, la demanderesse a donc proposé son invention.

La présente invention concerne ainsi un dispositif du type défini ci-dessus, caractérisé par le fait que lesdits moyens de signalisation comportent un condensateur se chargeant d'une énergie limitée en tension par une diode Zener quel que soit l'état de la régie, ledit condensateur permettant d'alimenter un générateur pour engendrer un message de préambule numérique formé d'un courant inverse de faible valeur à destination du central.

Grâce à l'invention, la régie n'est alimentée que depuis le central. Dans le dispositif de l'invention, pour disposer d'une énergie lorsque l'alimentation du central est coupée et pour demander l'alimentation, on dispose de moyens de stockage de l'énergie fournie par le central pendant une phase d'alimentation, cette énergie servant à engendrer un message de demande d'alimentation.

L'invention prévoit de grandes économies en consommation d'énergie pendant un état de repos.

L'invention procure un système simple de génération de messages de préambule.

L'invention, en permettant la mise en état de repos des moyens de transmission en absence de communication, diminue de ce fait les risques de diaphonie entre les moyens de transmission reliant les régies au central.

D'autres avantages et caractéristiques apparaîtront à la lecture de la description suivante de plusieurs formes de réalisation de l'invention, en référence aux dessins annexés.

La figure 1 est une représentation d'un dispositif de supervision de l'état boucle du combiné.

La figure 2 est une variante de la figure 1.

La figure 3 est une réalisation préférée de l'invention variante de la figure 2.

La figure 4 représente l'astable de la figure 3 de façon détaillée.

La figure 5 est un diagramme des temps de signaux présents au niveau de l'astable de la figure 3.

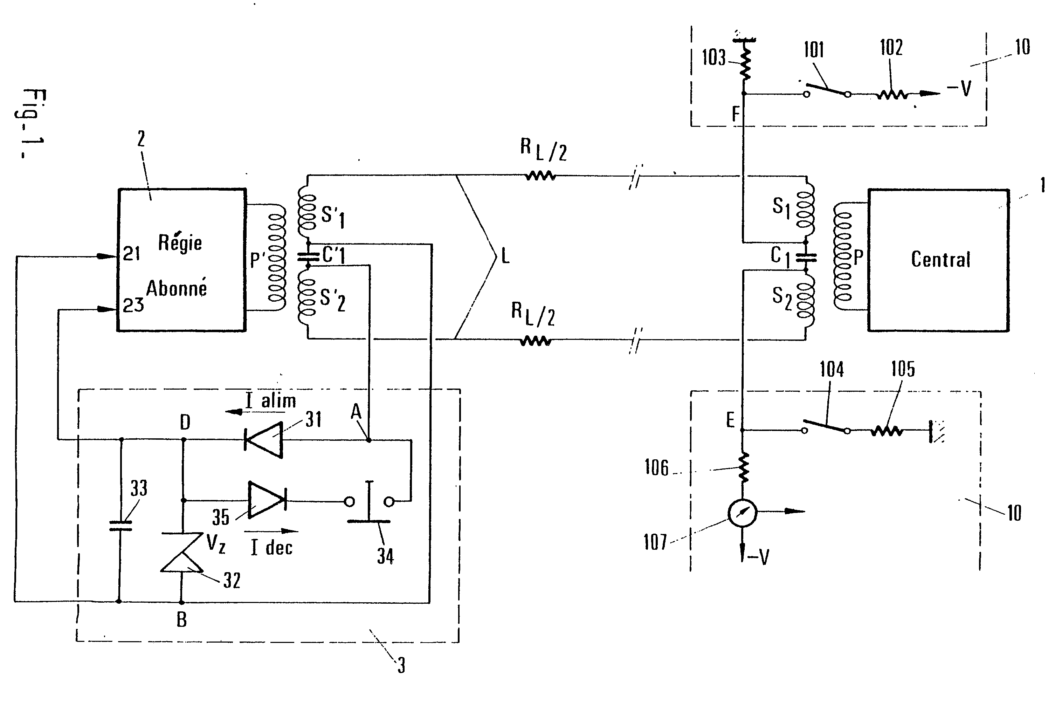

En se référant à la figure 1, le central 1 est relié à la ligne de transmission L par l'intermédiaire d'un primaire P, associé à deux enroulements secondaires $S_1$, $S_2$ séparés par un condensateur $C_1$. De l'autre côté de la ligne de transmission L, formée de deux fils de faible résistance, on dispose un système équivalent formé de deux secondaires $S'_1$, $S'_2$ séparés par un condensateur $C'_1$. La régie 2 est raccordée aux bornes de l'enroulement P' associé aux secondaires $S'_1$, $S'_2$.

Entre les bornes du condensateur $C'_1$ sont raccordées, selon l'invention, les bornes A et B du dispositif 3 de réception du courant d'alimentation I de la régie d'abonné 2.

Entre le point A et un point D situé en aval de A par rapport au central est branchée une diode 31, passante de A vers D. Entre le point D et le point B est branchée une diode Zener 32, passante de D vers B. En parallèle avec cette diode Zener 32 est branché, entre les points D et B, un condensateur 33 qui assure le filtrage de la tension récupérée aux bornes de la diode Zener 32. Entre les points D et A sont montés en parallèle avec la diode 31, le ou les contacts d'appel 34 du ou des terminaux et, en série avec ce contact 34, une diode 35 elle-même montée en anti-parallèle avec la diode 31. Les deux fils, l'un passant par A et D, l'autre par B, sont raccordés aux bornes 21 et 23 de la régie d'abonné 2 pour lui fournir un courant d'alimentation $I_{alim}$.

La ligne de transmission L, raccordée côté régie aux bornes du condensateur $C'_1$ et côté central aux bornes des enroulements $S_1$ et $S_2$, permet d'alimenter le dispositif de réception 3 et également la régie 2 qui lui est raccordée. A cet effet, côté central, on raccorde la ligne L, à travers les enroulements $S_1$ et $S_2$, aux bornes E et F d'une batterie 10. Le condensateur $C_1$ placé entre $S_1$ et $S_2$ assure le passage des signaux numériques.

Le point F est raccordé au potentiel — V par l'intermédiaire d'un interrupteur 101 placé en série avec une résistance 102. Ce point F est également relié à la terre par l'intermédiaire d'une autre résistance 103. Le point E est porté à la masse par l'intermédiaire d'un interrupteur 104 placé en série avec une résistance 105. Ce même point E est porté à un potentiel — V par l'intermédiaire d'une résistance 106 placée en série avec un détecteur de courant continu 107. Les valeurs des résistances 102 et 105 sont égales. Les valeurs des résistances 103 et 106 le sont également. La valeur de la résistance 102 est très inférieure à celle de la résistance 103 et de la même façon la valeur de la résistance 105 est très inférieure à celle de la résistance 106. Les interrupteurs 101 et 104 commandent l'alimentation de la ligne passant par A et B côté abonné. Ainsi le courant d'alimentation $I_{alim}$ traverse entre la diode 31 et alimente la régie d'abonné 2 quel que soit l'état du contact 34 du terminal. La diode Zener 32 conduit dès que la tension d'alimentation V a dépassé son seuil $V_z$. Le courant $I_{alim}$ traversant la diode 31 s'écrit :

$$I_{alim} = \frac{V - V_z}{R_L + R_{(102+105)}} \sim 20 \text{ à } 30 \text{ mA}$$

où $R_L$ est la résistance de la ligne L.

Ainsi dans le cas d'un appel arrivée, le central commande l'alimentation de la régie 2 en fermant les interrupteurs 101 et 104.

Dans le cas d'un appel départ, les interrupteurs 101 et 104 sont initialement ouverts et il ne circule pas de courant au niveau du détecteur 107 côté central.

Dès que le contact 34 du combiné est soulevé, la boucle est fermée et un courant de décrochage $I_{Dec}$ s'écoule à travers la diode 35 de l'ordre de :

$$I_{Dec} = \frac{V - V'_z}{R_L + R_{103+106}}$$

où $V'_z$ est la tension inverse aux bornes de la diode Zener 32 ($V'_z < V_z$).

Ce courant inverse de décrochage est mesurable côté central au moyen du détecteur de courant continu 107. Dès la détection d'un courant inverse de décrochage par le détecteur 107, le central 1 commande l'alimentation normale de la régie 2 par la fermeture des interrupteurs 101 et 104.

Un tel système permet une alimentation par le central quel que soit l'état du contact 34 du terminal.

La surveillance de l'état boucle de l'abonné s'effectue par simple détection du courant inverse $I_{dec}$ de faible valeur côté central. L'avantage de cette solution consiste à ne pas prévoir de courant de repos permanent.

Un petit inconvénient apparaît toutefois dans cette première forme de réalisation car le sens de connexion des fils de la paire L n'est pas indifférent.

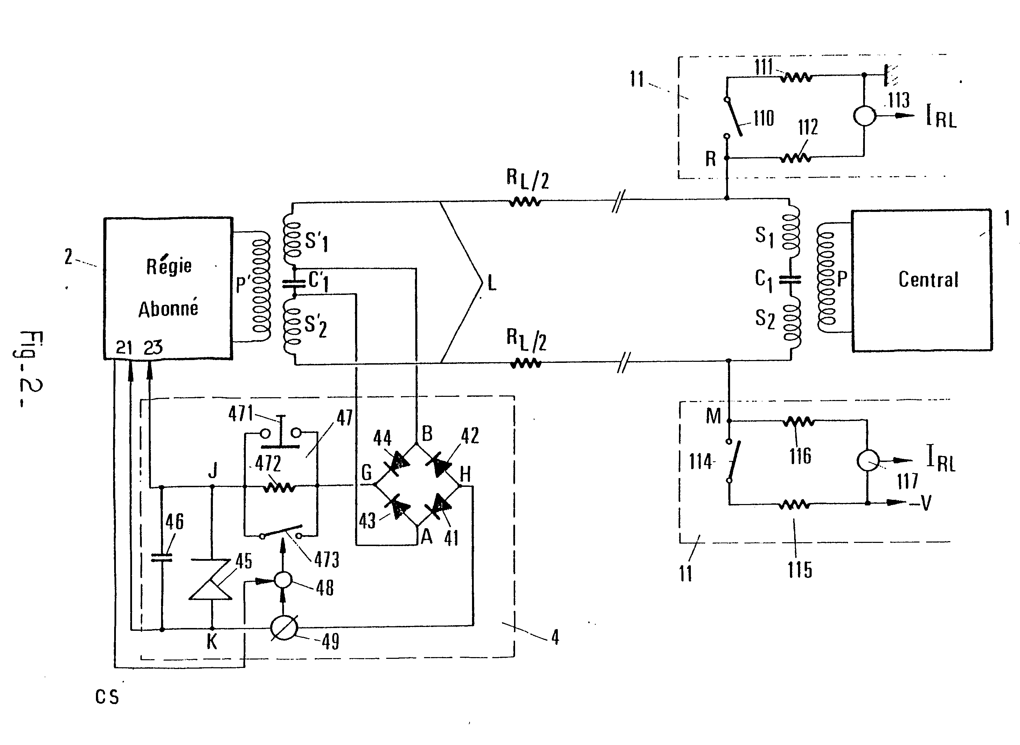

En se référant à la figure 2, une alimentation de la régie d'abonné est faite par le central également quel que soit l'état du terminal d'abonné ; toutefois le sens de connexion de la paire L est indifférent.

En effet, le central 1 est raccordé à la ligne L au moyen des enroulements P, $S_1$, $S_2$ et du condensateur $C_1$ de la même façon que sur la figure 1. Côté régie, les enroulements $S'_1$, $S'_2$, P' sont également disposés comme sur la figure 1. Le dispositif de supervision de la figure 2 se distingue essentiellement de celui de la figure 1 d'une part, côté régie, par un dispositif 4 de déclenchement au lieu du dispositif 3 branché aux bornes A et B du condensateur $C'_1$, et d'autre part, côté central, par un circuit d'alimentation 11 et de détection de courant au lieu du circuit 10 de la figure 1. Le dispositif 4 branché aux bornes A et B du condensateur $C'_1$ comporte divers éléments : entre les points A et B est placé un pont redresseur formé de quatre diodes (41, 42, 43, 44) les deux diodes 41, 42 étant disposées sur une branche, les diodes 43 et 44 sur l'autre. Pour chaque branche, on désigne par G et par H le point situé entre les deux diodes du pont. Ainsi le point G réunit les cathodes des diodes 43 et 44 tandis que H réunit les anodes des diodes 42 et 41. Entre ces points G et H sont branchés les deux fils d'alimentation de la régie d'abonné 2.

On branche entre les deux fils passant par G et H une diode Zener 45 dont la cathode est raccordée en J au fil passant par le point G et l'anode en K au fil passant par H. En parallèle avec cette diode Zener 45, entre J et K, on place un condensateur 46. En outre, entre le point J et le point G sur l'un des fils d'alimentation de la régie d'abonné 2 on place un ensemble 47 comprenant trois branches placées en parallèle. Sur la première branche on place le contact 471 du terminal. Sur la seconde branche on place une résistance $R_2$, 472, dite de décrochage de grandeur convenablement choisie, sur la troisième branche on place un interrupteur 473 dont la fonction sera ultérieurement décrite. Ainsi les deux fils passant par G et J, d'une part, et par H et K, d'autre part, alimentent la régie en courant quel que soit l'état du contact 471 du terminal. Dans le cas où plusieurs terminaux sont rattachés à la régie 2, plusieurs contacts sont alors branchés en parallèle avec le contact 471. Les fils d'alimentation passant par J et K sont respectivement rattachés en 21 et 23 à la régie d'abonné 2.

De plus, dans tous les cas, lorsque la régie 2 est alimentée, celle-ci est reliée au dispositif de déclenchement 4 au moyen d'un canal de signalisation CS. Ce signal CS agit sur une porte ET 48 qui actionne le relais 473 monté sur une branche de l'ensemble 47. Un détecteur 49, inséré sur le fil d'alimentation entre K et H, fournit également une indication de courant à l'entrée de la porte 48.

Entre les points 21 et 23, la régie d'abonné 2 reçoit une tension d'alimentation récupérée aux bornes de la diode Zener 45, cette tension étant filtrée par le condensateur 46. Côté central, on insère un dispositif d'alimentation en courant continu 11 de la façon suivante : les sorties des enroulements secondaires $S_1$ et $S_2$ sont reliées aux points R et M de ce dispositif 11, respectivement.

Le point R est porté à la masse par l'intermédiaire d'un interrupteur 110 placé en série avec une résistance 111. En parallèle avec l'interrupteur 110 et la résistance 111 sont placés une résistance 112 placée en série avec un détecteur de courant continu 113. Le point M est relié au potentiel — V sur une branche, par l'intermédiaire d'un relais 114 placé en série avec une résistance 115, et sur l'autre branche, placée en parallèle avec la première, par l'intermédiaire d'une résistance 116 placée an série avec un détecteur de courant continu 117.

La structure particulière de la figure 2 sera mieux comprise à la lecture du fonctionnement du dispositif de l'invention.

En régime d'alimentation de la régie (phase 1), les interrupteurs 110 et 114 sont fermés, et côté central le dispositif d'alimentation 11 fournit la tension V de la batterie à la régie d'abonné 2. Côté régie, le contact 471 est fermé entre les points J et K du dispositif de déclenchement 4 ; un courant $I_{alim}$ est disponible et fourni à la régie 2 au moyen de deux fils d'alimentation, et s'écrit :

$$I_{alim} = \frac{V - V_z}{R_1 + R_L}$$

où $V_z$ est la tension de Zener de la diode Zener 45,
où $R_1$ est la résistance d'alimentation avec $R_1 = 2R_{111} = 2R_{115}$, et
où $R_L$ est la résistance de la ligne L également repartie sur chaque fil.

Ce courant $I_{alim}$, s'élevant à 20-30 mA environ, traverse alors le contact 471 et le terminal d'abonné devient actif.

En régime de repos (phase 2), côté régie le contact 471 est ouvert de même que le contact 473 ; côté central, les contacts 110 et 114 du dispositif d'alimentation 11 sont également ouverts. Un courant dit de repos alimente encore la régie en passant par les résistances 112 et 116.

($R_{112} = R_{116} = (R_2/2)$). Ce courant de repos s'écrit :

$$I_{rep} = \frac{V - V_z}{2 R_2 + R_L} \sim 1 \text{ mA}$$

4

où

$R_2 = R_{112} + R_{116} = R_{472}$,

$R_L$ est la résistance de la ligne de transmission,

$V_Z$ est la tension de la diode Zener 45, et

V est la tension fournie par le dispositif d'alimentation 11.

Dans une troisième phase, supposons que, le dispositif étant à l'état de repos de la $2^{eme}$ phase, l'abonné souhaite établir une communication de « départ ». Il agit sur son terminal qui ferme alors son contact 471 ; alors un courant $I_{dec}$ s'établit. Ce courant, mesurable côté central au moyen des détecteurs 113 et 117 s'écrit :

$$I_{dec} = \frac{V - V'_Z}{R_2 + R_L} \sim 2 \text{ mA}$$

où $V'_Z$ est la tension inverse de la diode Zener 45.

Le central 1, dès la détection de la modification du courant $I_{Rep}$ en $I_{Dec}$, commande la fermeture des contacts 110 et 114, ce qui autorise l'alimentation de la régie d'abonné 2 avec le courant normal d'alimentation $I_{alim}$.

De la même façon, en cas d'appel arrivée, le central 1 commande la fermeture des contacts 110 et 114, ce qui modifie le courant, de $I_{Rep}$ à $I_{Dec}$. Côté régie, ce courant traverse la résistance 472. Ce courant $I_{Dec}$ est détecté par le dispositif 49 qui envoie un signal sur la porte 48 qui commande la fermeture du contact 473. Dès lors, le courant entre J et K appliqué aux bornes 21 et 23 de la régie 2 devient $I_{alim}$, c'est-à-dire le courant d'alimentation de la phase 1. En fin de communication, deux cas sont possibles : soit le central 1 souhaite suspendre la communication, soit c'est la régie 2 qui le souhaite.

Supposons dans un premier cas (cas a) que le central souhaite suspendre la communication. Alors il envoie un message de signalisation sur le canal numérique de signalisation CS qui commande l'ouverture du contact 473. Le courant de $I_{alim}$ devient $I_{dec}$. Le central commande ensuite l'ouverture des contacts 110 et 114 ce qui modifie le courant émis en ligne, qui devient $I_{rep}$, de la $2^{ème}$ phase.

Supposons dans un second cas (cas b) que c'est la régie qui souhaite suspendre la communication ; alors elle transmet en ligne sur la voie de signalisation CS un message numérique de demande de suspension d'alimentation et elle commande l'ouverture du contact 473. Le central 1, après avoir reçu le message, commande l'ouverture des contacts 110 et 114, ce qui modifie également le courant en $I_{rep}$ ($2^{ème}$ phase).

Un tel dispositif démontre l'aisance d'une alimentation centrale, à commande centrale et uniquement en fonction des besoins du terminal d'abonné. Dans la pratique, si la tension d'alimentation V fournie par la batterie 11 s'élève à 48 Volts de tension maximum côté central, on a 6 à 8 Volts de tension d'utilisation côté terminal lorsque le terminal est situé au bout d'une ligne, à 4 km environ et est traversée par un courant de 35 mA.

Un tel mode de fonctionnement implique cependant un courant de repos, faible certes, de l'ordre du milliampère, pour chaque ligne de terminal d'abonné.

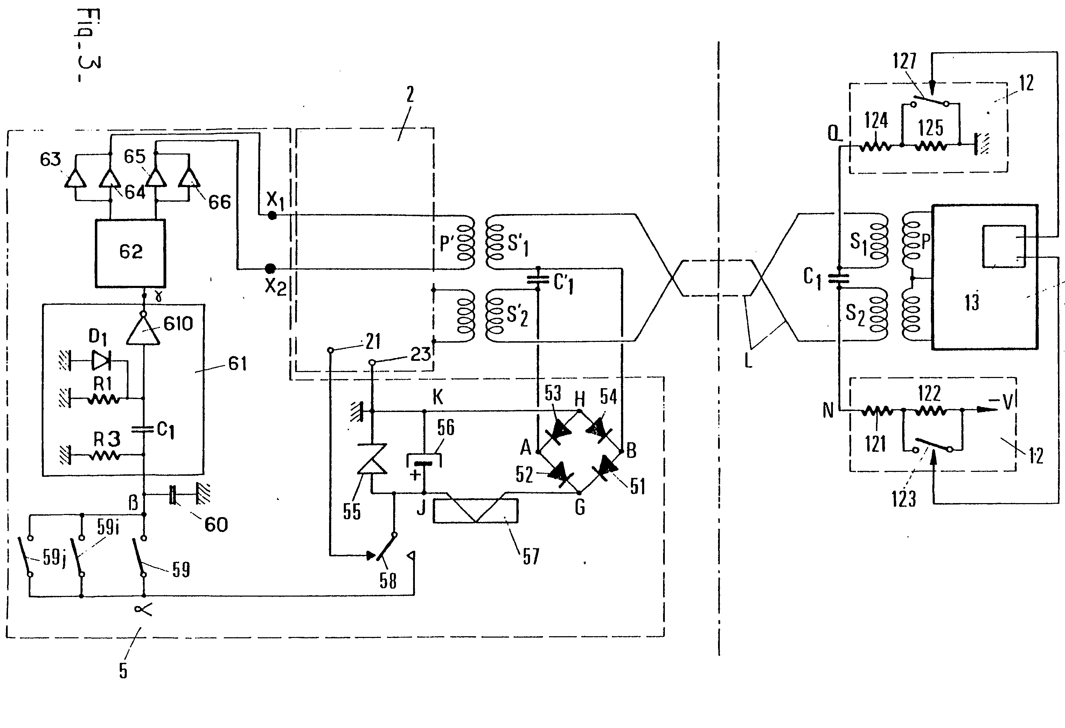

La figure 3 représente, de façon détaillée, le dispositif préféré de l'invention, également à alimentation centrale, commandée côté central et ne prévoyant pas de courant de repos permanent. Le central 1 est raccordé à la régie 2 de la même façon que sur les figures 1 et 2, au moyen des enroulements $S_1$, $S_2$, $S'_1$, $S'_2$, des condensateurs $C_1$ et $C'_1$ et de la ligne L.

Un dispositif d'alimentation 12 est branché côté central aux bornes N et Q du condensateur $C_1$. Le point Q est porté à la masse par l'intermédiaire de deux résistances 124 et 125. En parallèle avec la résistance 125, on place un contact de relais 127. Le point N est porté au potentiel — V (par exemple égal à — 48 Volts) par l'intermédiaire des résistances 121 et 122. De la même façon, un contact de relais 123 est placé en parallèle avec cette résistance 122.

Côté régie, les bornes A et B du condensateur $C'_1$ sont raccordées à un dispositif de réception 5. Ce dispositif 5 comporte un pont redresseur à diodes réparties sur deux branches, la diode 53 en série avec la diode 54 pour l'une, la diode 52 en série avec la diode 51 pour l'autre. Le point H, disposé entre les diodes 53 et 54, est relié aux anodes de ces deux diodes 53, 54. Le point G, disposé entre les diodes 51 et 52, est relié aux cathodes de ces deux diodes 51 et 52. Entre les points H et G sont raccordés les points K et J, respectivement, qui sont reliés aux bornes d'un condensateur 56. En parallèle avec ce condensateur 56 est montée une diode Zener 55 dont la cathode est raccordée au point J. Le point K est porté à la masse. Entre le point G et le point J est disposé un dispositif détecteur de courant 57, par exemple un relais, qui agit sur un dispositif de commutation 58 relié au point J. Ce dispositif de commutation 58, symbolisé sur la figure 3 comme un interrupteur, est susceptible de prendre deux positions : l'une pour relier le point J au point α, l'autre pour relier le point J à la borne 21 de la régie 2. Dans cette dernière position, la régie est alors alimentée entre la borne 21 reliée à J et la borne 23 reliée à la masse locale (K).

Entre le point α et un point β situé en avant de α sont placés N contacts de terminaux d'abonnés en parallèle dont les contacts $(59_i)_{1 \leqslant i \leqslant N}$ sont représentés sur la figure 3. Le point β est relié à l'entrée d'un circuit monostable 61. Ce monostable 61 forme essentiellement, avec un circuit astable 62, un dispositif d'émission de séquence d'appel. Ce dispositif d'émission de séquence d'appel se trouve alimenté lors de la fermeture du contact 59 grâce à l'énergie emmagasinée dans le condensateur 56.

Entre le circuit monostable 61 et le point β est interposé un condensateur 60 dont l'autre borne est placée à la masse. Le monostable 61 comporte un circuit RC formé d'un condensateur $C_1$ placé en série avec une résistance $R_1$ dans laquelle le condensateur $C_1$ se décharge. L'autre borne de la résistance $R_1$ est portée à la masse, tandis que le condensateur $C_1$ est relié de son autre borne au point β. En parallèle avec cette résistance $R_1$ est placée une diode $D_1$ rendue passante de la masse vers $R_1$.

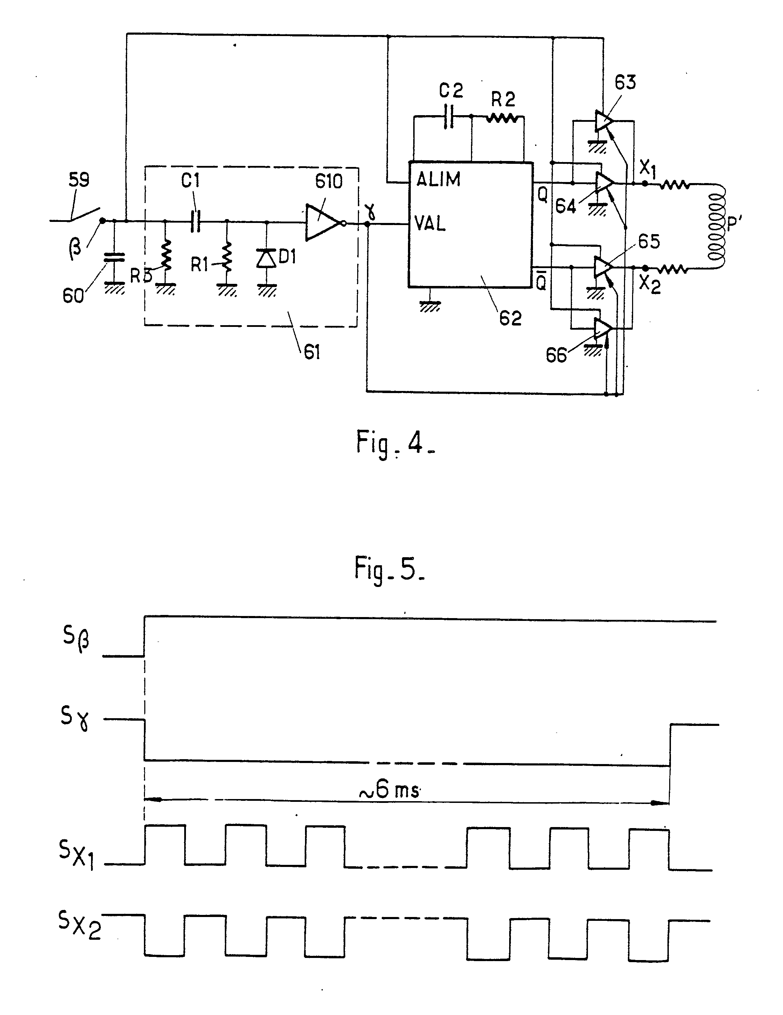

Cette diode a pour fonction de supprimer la pointe négative apparaissant à la coupure de la tension appliquée en β. Un amplificateur inverseur 610, avec dispositif de seuil, est relié à la borne commune à $R_1$ et $C_1$ et fournit un signal Sγ. Comme représenté sur la figure 4, ce circuit monostable 61 comprend également une résistance de polarisation $R_3$ placée entre le point β et la masse. Cette résistance $R_3$ est très grande par rapport à $R_1$. La sortie de ce circuit monostable 61 fournit donc un signal Sγ de largeur appropriée déterminée en particulier par la valeur de la capacité $C_1$ et de la résistance $R_1$. On choisit par exemple pour $C_1$ 0,1 μF environ tandis que la résistance $R_1$ est choisie de l'ordre de 82 kΩ. On obtient ainsi pour le signal Sγ une impulsion de largeur de 6 ms à 10 ms. La fermeture d'un contact $59_i$ permet à la fois l'alimentation du monostable 61 et la formation du signal Sγ de calibration de la séquence d'appel. Ce signal Sγ est appliqué à l'entrée « validation » d'un circuit astable 62 fournissant un train d'impulsions calibrées par un condensateur $C_2$ et une résistance $R_2$. Cet astable 62 est alimenté en énergie directement par un raccordement au point β et peut alors fournir sur ses sorties Q et Q̄ des trains d'impulsions contrôlées par le créneau Sγ. On choisit par exemple pour le train d'impulsions, une fréquence de l'ordre de 20 kHz. La sortie Q de cet astable 62 est reliée aux entrées de deux amplificateurs 63 et 64 montés en parallèle. Ces amplificateurs sont à trois états : l'état 0 et l'état 1, correspondant aux basses impédances, et l'état « haute impédance ». A cet effet, ces amplificateurs reçoivent le signal Sγ directement du point γ et sont également reliés à la masse. Ces amplificateurs sont alimentés directement depuis le point β. Ainsi, pendant toute la durée du créneau déterminé par Sγ, les sorties des amplificateurs 63 et 64 fournissent en basse impédance des impulsions formées de 1 et 0 amplifiées. Dès que Sγ est à l'état 1 ces sorties repassent en haute impédance. De la même façon que les amplificateurs 63 et 64, deux amplificateurs 65 et 66 montés en parallèle traitent le signal obtenu sur la sortie Q̄ de l'astable 62 et forment un signal Sx2 en opposition de phase avec le signal Sx1.

Les sorties des amplificateurs 63 et 64 sont raccordées à celles des amplificateurs 65 et 66 par l'intermédiaire d'un enroulement P'. Le courant circulant dans l'enroulement P' entre les points $X_1$ et $X_2$ est le signal de préambule tel que représenté sur le diagramme de la figure 5. Il se présente comme une suite d'impulsions pendant toute la durée pendant laquelle le signal $S_y$ est à l'état 0. Puis Sx1 et Sx2 repassent à l'état haute impédance dès que Sγ est à l'état 1. En reprenant la figure 3, l'enroulement P' transmet ce signal aux bornes de l'enroulement $S'_1$ puis sur la ligne L vers le central 1.

Un dispositif 13 de réception des messages numériques provenant de la régie 2 est également prévu côté central. Après décodage des messages, ainsi qu'il sera explicité plus loin, ce dispositif 13, inséré dans le central 1, est capable de commander la fermeture des relais 123 et 127.

Le fonctionnement des divers organes de la figure 3 explicite la structure ainsi décrite.

Lorsque le central 1 souhaite alimenter la régie pour appeler l'un des terminaux, le numéro i par exemple représenté par son contact 59i, il commande tout d'abord, par l'intermédiaire du dispositif 13, la fermeture des relais 127 et 123 pour alimenter la régie 2. Ces relais shuntent les résistances 125 et 122 et le courant de ligne s'élève alors à une valeur de 25 à 30 mA environ. Ce courant actionne le détecteur 57 qui agit sur l'interrupteur 58. Le point J est alors raccordé au point d'alimentation 21 de la régie 2. La régie 2 est alors alimentée entre les bornes 21 et 23. L'appel du terminal souhaité peut alors s'effectuer par l'envoi de massages dans le canal de signalisation CS.

Dès que la régie n'a plus besoin d'être alimentée, elle envoie en ligne un message numérique au central au moyen du canal CS. La reconnaissance de message fin de communication commande alors l'ouverture des relais 123 et 127. Côté régie, le détecteur 57 détecte l'absence de courant ligne et autorise l'interrupteur 58 à reprendre sa position initiale (J raccordé au point α). La régie 2 n'est alors plus alimentée. Toutefois la tension — V, fournie par le dispositif d'alimentation 12, est maintenue aux bornes du condensateur $C'_1$ et aux bornes K et J du condensateur 56 et maintient ainsi chargé le condensateur 56. Un courant de repos très faible, inférieur à 1 mA, et nul si les pertes de la ligne et du condensateur 56 sont nulles, permet au condensateur 56 d'emmagasiner de l'énergie qui sera mise à la disposition de la régie 2 pour les besoins d'émission du message de préambule. Cette phase s'appelle l'état de veille.

La phase d'appel de l'abonné correspond à l'étape suivante, la régie 2 n'étant pas alimentée par le central, les relais 123 et 127 sont ouverts, le relais 58 est encore relié au point α. Dès que l'abonné souhaite appeler (appel départ), il décroche son combiné et ferme le contact 59i. Le point α est alors alimenté par l'énergie emmagasinée pendant la veille par le condensateur 56. L'astable 62 est alors sous tension et peut émettre un message numérique transmis par l'enroulement P', puis en ligne par la régie. Le message est reçu par le central, détecté par le dispositif 13 qui transmet aux relais 127 et 123 un ordre de fermeture. La ligne se trouve alors alimentée par un courant de ligne qui, à la réception par le dispositif 5, déclenche le détecteur 57. Ce détecteur 57 actionne l'interrupteur 58 qui se trouve ainsi raccordé au point 21 et la régie 2 est alors alimentée.

Un tel dispositif de déclenchement 5 permet l'émission d'un message de préambule vers le central et autorise l'alimentation de la régie 2 en réponse à une demande venant de l'un des terminaux raccordés à la régie d'abonné.

Le dispositif selon l'invention permet une alimentation de la régie 2 et éventuellement du terminal télématique 59 et ceci indépendamment du sens de connexion de la paire formant la ligne L.

## Revendications

1. Dispositif d'alimentation d'une régie d'abonné (2), comportant, côté central (1), des moyens (11 ; 12) d'alimentation en courant continu de ladite régie (2) et des moyens (110, 114, 113, 117 ; 13, 127, 123) de commande de ladite alimentation, et, côté régie, des moyens (45, 41, 44 ; 51-54, 62) de signalisation agencés pour initialiser une communication, caractérisé par le fait que lesdits moyens de signalisation comportent un condensateur (46 ; 56) se chargeant d'une énergie limitée en tension par une diode Zener (45 ; 55) quel que soit l'état de la régie (2), ledit condensateur permettant d'alimenter un générateur (41-44 ; 51-54, 62) pour engendrer un message de préambule numérique formé d'un courant inverse de faible valeur à destination du central (1).

2. Dispositif selon la revendication 1, caractérisé par le fait que lesdits moyens de signalisation (56, 62) permettent d'engendrer un message de préambule à destination du central.

3. Dispositif selon la revendication 2, caractérisé par le fait que, après réception dudit message de préambule, lesdits moyens de commande (13, 127, 123) de ladite alimentation (12) commandent l'alimentation de la régie (2) en courant continu.

4. Dispositif selon l'une des revendications 2 et 3, caractérisé par le fait que ledit message de préambule est un courant de valeur prédéterminée.

5. Dispositif selon la revendication 1, caractérisé par le fait que lesdits moyens de commande de ladite alimentation comprennent, sur une sortie, un interrupteur (110) et une résistance (111) en série, en parallèle sur l'interrupteur (110) et la résistance (111), une résistance (112) et un détecteur de courant continu (113) en série, et, sur l'autre sortie, un relais (114) et une résistance (115) en série, et, en parallèle sur le relais (114) et la résistance (115), une résistance (116) et un détecteur de courant continu (117) en série.

6. Dispositif selon l'une des revendications 1 et 5, caractérisé par le fait que lesdits moyens de signalisation comprennent, en parallèle, entre la diode Zener (45) et le générateur de message (41-44), au moins un contact de terminal (471), une résistance de décrochage (472), et un interrupteur (473) commandé par un canal de signalisation (cs) et un détecteur de courant (49).

7. Dispositif selon l'une des revendications 1 à 4, caractérisé par le fait que lesdits moyens de commande de ladite alimentation comprennent, sur chacune de ses sorties, une première résistance (124, 121) et une seconde résistance (125, 122) et un relais (127, 123) en parallèle, les relais (123, 127) étant commandés par un dispositif (13) de réception du message de préambule.

8. Dispositif selon l'une des revendications 1, 2, 3, 4 et 7, caractérisé par le fait que le condensateur (56) desdits moyens de signalisation est agencé pour alimenter un dispositif d'émission de séquence d'appel comprenant un circuit monostable (61) et un circuit astable (62) en série.

## Claims

1. Device for supplying a subscriber control system, comprising at the exchange (1) supply means (11 ; 12) for supplying said subscriber control system (2) with direct current, control means (110, 114, 113, 117 ; 13, 127, 123) for controlling said supply means, and at the control system signalization means (45, 41, 44 ; 51-54, 62) for initializing a communication, characterized in that said signalization means comprise a capacitor (46 ; 56) being charged with an energy of which the voltage is limited by a Zener diode (45 ; 55), whatever the state of the subscriber control system (2), said capacitor supplying a numerical preamble message generator (41-44 ; 51-54, 62), said preamble message, to be sent to the exchange (1), being formed with an inverse current of low value.

2. Device according to claim 1, characterized in that said signalization means (56, 62) generate a preamble message to be sent to the exchange.

3. Device according to claim 2, characterized in that said control means (13, 127, 123) controlling said supply means (12) controls supply of the control system (2) with direct current after reception of said preamble message.

4. Device according to one of claim 2 and 3, characterized in that said preamble message is a current of predetermined value.

5. Device according to Claim 1, wherein said control means controlling said supply means comprises, at one output, a switch (110) and a resistor (111) connected in series, a resistor (112) and a direct current detector (113) connected in series and in parallel with the switch (110) and the resistor (111), and, at the other output, a relay (114) and a resistor (115) connected in series, a resistor (116) and a direct current detector (117) connected in series and in parallel with the relay (114) and the resistor (115).

6. Device according to one of Claims 1 and 5, characterized in that said signalization means comprises at least a terminal contact (471), a lift-off resistor (472) and a switch (473), which are connected in parallel between the Zener diode (45) and the message generator (41-44), said switch (473) being controlled by a signalization channel (cs) and a current detector (49).

7. Device according to one of Claims 1 to 4, characterized in that said control means controlling said supply means comprises, at each output, a first resistor (124, 121) and a second resistor (125, 122) connected in parallel with a relay (127, 123), the relays (123, 127) being controlled by a preamble message receiving device (13).

8. Device according to one of Claims 1, 2, 3, 4 and 7, characterized in that said capacitor (56) of said signalization means is arranged for supplying a call sequence emitting device comprising a monostable circuit (61) and an astable circuit (62) connected in series.


**Patentansprüche**

1. Versorgungsvorrichtung für eine Teilnehmerendstelle (2), welche zentralseitig (1) Gleichstromspeiseeinrichtungen (11 ; 12) für die genannte Endstelle (2) und die Steuervorrichtungen (110, 114, 113, 117 ; 13, 127, 12) der genannten Versorgung umfaßt und, terminalseitig, Meldevorrichtungen (45, 41, 44 ; 51-54, 62) zum Initialisieren eines Gespräches, dadurch gekannzeichnet, daß die genannten Meldevorrichtungen einen Kondensator (46 ; 56) beinhalten, welcher über eine Zenerdiode (45 ; 55) mit spannungsbegrenzter Energie belastet wird, unabhängig vom Zustand der Endstelle (2), wobei der genannte Kondensator die Versorgung eines Generators (41-44 ; 51-54, 62) ermöglicht zur Erzeugung einer aus einem niedrigen Gegenstrom gebildeten numerischen Primärmeldung für die Zentrale (1).

2. Vorrichtung gemäß Anspruch 1, dadurch gekennzeichnet, daß die genannten Meldevorrichtungen (56, 62) die Erzeugung einer Primärmeldung für die Zentrale ermöglichen.

3. Vorrichtung gemäß Anspruch 2, dadurch gekennzeichnet, daß nach Empfang der genannten Primärmeldung die genannten Steuervorrichtungen (13, 127, 123) der genannten Versorgung (12) die Speisung der Endstelle (2) mit Gleichstrom steuern.

4. Vorrichtung gemäß einem der Ansprüche 2 und 3, dadurch gekennzeichnet, daß die genannte Primärmeldung ein Strom vorbestimmten Wertes ist.

5. Vorrichtung gemäß Anspruch 1, dadurch gekennzeichnet, daß die genannten Steuervorrichtungen der genannten Versorgung an einem Ausgang einen Schalter (110) und einen Serienwiderstand (111), parallel zum Schalter (110) und zum Widerstand (111) einen Widerstand (112) und in Serie eine Gleichstromerfassung (113) beinhalten und, am anderen Ausgang, ein Relais (114) und einen Serienwiderstand (115) und, parallel zum Relais (114) und zum Widerstand (115) einen Widerstand (116) und in Serie eine Gleichstromerfassung (117).

6. Vorrichtung gemäß einem der Ansprüche 1 und 5, dadurch gekennzeichnet, daß die genannten Meldevorrichtungen parallel, zwischen der Zenerdiode (45) und dem Meldungsgenerator (41-44), mindestens einen Terminalkontakt (471), einen Loshackenwiderstand (472) und einen, von einem Meldekanal (cs) und einer Stromerfassung (49) gesteuerten Schalter (473) umfassen.

7. Vorrichtung gemäß einem der Ansprüche 1-4, dadurch gekennzeichnet, daß die genannten Steuervorrichtungen der genannten Versorgung an jedem ihrer Ausgänge einen ersten Widerstand (124, 121) und einen zweiten Widerstand (125, 122) und parallel dazu ein Relais (127, 123) umfassen, wobei die Relais (123, 127) von einer Primärmeldungsempfangsvorrichtung (13) gesteuert werden.

8. Vorrichtung gemäß einem der Ansprüche 1, 2, 3, 4 und 7, dadurch gekennzeichnet, daß der Kondensator (56) der genannten Meldevorrichtungen ausgelegt ist für die Versorgung einer Aufruffolge-Übertragungsvorrichtung mit einem monostabilen Kreis (61) und einem astabilen Kreis (62) in Serie.

Fig. 1.

0 083 281

Fig_2_

Fig_3_

0 083 281

Fig. 4.

Fig. 5.